# FASCICULE DE BREVET EUROPEEN

(11) **EP 3 305 592 B1**
(45) Date de publication et mention de la délivrance du brevet: **07.04.2021**
(21) Numéro de dépôt: 17193810.3
(22) Date de dépôt: 28.09.2017
(51) Int. Cl.: B60Q 1/08

(54) **SYSTEME D'ECLAIRAGE POUR VEHICULE AUTOMOBILE**
BELEUCHTUNGSSYSTEM FÜR KRAFTFAHRZEUG
LIGHTING SYSTEM FOR A MOTOR VEHICLE

(30) Priorité: 29.09.2016 FR 1659347
(43) Date de publication de la demande: 11.04.2018
(73) Titulaire: Valeo Vision, 93012 Bobigny Cedex (FR)
(72) Inventeur: MOREL, Xavier, 93012 BOBIGNY Cedex (FR); LUO, Weicheng, 93012 BOBIGNY Cedex (FR)
(74) Mandataire: Valeo Visibility

(56) Documents cités:
- EP-A2- 1 433 654
- WO-A1-2014/119980
- DE-A1-102015 201 766
- US-A1- 2008 198 372

## Description

### DOMAINE TECHNIQUE DE L'INVENTION

La présente invention est relative notamment à un système d'éclairage. Une application préférée concerne l'industrie automobile, pour l'équipement de véhicules, en particulier pour la réalisation de dispositifs susceptibles de pouvoir émettre des faisceaux lumineux, encore appelés fonctions d'éclairage, répondant en général à des réglementations. L'émission de faisceaux vers l'avant du véhicule est particulièrement visé.

### ETAT DE LA TECHNIQUE

Les dispositifs d'éclairage et de signalisation connus sont jusqu'à présent prévus pour émettre par exemple : un faisceau de croisement, un faisceau de route, un faisceau d'éclairage pour temps de brouillard, un faisceau de signalisation.

Le faisceau de croisement doit assurer à la fois la qualité de l'éclairage et l'absence, ou la réduction, de la gêne occasionnée par le flux lumineux produit pour les véhicules alentours. Actuellement, les feux de croisement sont essentiellement définis dans cette optique, avec, en particulier, le recours à des coupures parfois complexes en haut de faisceau, de sorte à limiter précisément ou éviter l'éclairement au-dessus de la ligne d'horizon, et à concevoir au mieux une zone de projection de lumière à proscrire car susceptible de gêner le conducteur d'un véhicule croisé.

De même les faisceaux routes actuels présentent des inconvénients similaires, à savoir une résolution très faible et des degrés de liberté limités par leur technologie. Bien que des améliorations aient été proposées pour les faisceaux de route, comme par exemple l'utilisation de deux dispositifs identiques d'éclairage en bandes, cela ne solutionne pas le problème de la résolution que ce type de technologie peut atteindre.

L'émergence de systèmes hautement résolus de type matrice à micro-miroirs appelé en termes Anglo-Saxon « Digital Micromirror Device » (DMD), permet de réduire ces limitations, et le document US 2002/0196636 en est un bon exemple Le document EP 1 433 654 A2 décrit un autre dispositif d'éclairage de type matrice à micro-miroirs fournissant une superposition de deux enveloppes de projection selon l'état de l'art antérieur.

Cependant ici encore, ce type de système présente de nombreux inconvénients dès lors que l'on souhaite adapter la projection des faisceaux lumineux à des conditions extérieures particulières et dynamiques. Il existe en effet une limitation inhérente à la technologie actuelle qui réside dans le choix entre puissance d'éclairage et résolution d'éclairage. Les systèmes actuels hautement résolus ne permettent pas d'atteindre les caractéristiques d'éclairage des systèmes faiblement résolus et les systèmes faiblement résolus peinent à atteindre la qualité visuelle des systèmes de type DMD. Ainsi, il existe un réel besoin pour des systèmes de projection lumineux dynamiques et adaptatifs.

L'invention s'inscrit dans ce cadre.

### RESUME DE L'INVENTION

La présente invention concerne un système d'éclairage pour véhicule, comprenant au moins un premier dispositif de projection d'au moins une source de lumière pixélisée définissant au moins une première enveloppe de projection et au moins un deuxième dispositif de projection d'au moins un faisceau de lumière pixélisé définissant au moins une deuxième enveloppe de projection et configuré pour projeter au moins un pictogramme, caractérisé en ce que ladite au moins une première enveloppe de projection et ladite au moins une deuxième enveloppe de projection présentent au moins une zone de recouvrement.

La présente invention apporte de nombreux degrés de liberté à un système d'éclairage pour véhicule permettant d'améliorer la lisibilité de l'écriture de route relativement aux arts antérieurs : gestion du contraste, meilleure résolution, meilleure précision.

De plus, de manière avantageuse, la présente invention améliore l'homogénéité au niveau de l'interface des enveloppes de projection issues des deux dispositifs de projection.

Le couplage d'une source de lumière pixélisée (faisceau code à plusieurs zones par exemple) avec au moins un faisceau pixélisé (de type DMD par exemple) afin de former des enveloppes de projection pouvant se superposer en positif ou en négatif, de sorte à écrire de préférence aussi bien dans un mode positif que négatif, assure une amélioration importante de la lisibilité de l'écriture de route et cela de manière dynamique relativement aux conditions de visibilité de l'utilisateur.

Selon une variante particulièrement avantageuse, le profil de contraste du pictogramme projeté est renforcé par rapport à l'ambiance lumineuse moyenne du faisceau d'arrière-plan, sur lequel ou dans lequel le motif est inclus.

En effet, la présente invention dispose d'un grand nombre de degrés de liberté ce qui permet de s'adapter à de nombreuses situations tant sur le plan des conditions de visibilité que sur la pertinence et la gestion des informations à projeter.

La présente invention permet ainsi d'améliorer la visibilité et la réponse de l'œil à des informations projetées notamment lorsque celles-ci sont relatives à la sécurité. La présente invention permet l'augmentation du contraste, donc de la visibilité, et ainsi de réduire le temps de réaction de l'utilisateur, et donc la distance de freinage, ce qui accroit donc la sécurité de la conduite.

A cette fin, par exemple, les bordures du pictogramme, depuis l'extérieur de celui-ci vers l'intérieur et dans au moins une dimension (largeur ou hauteur) du plan de projection du pictogramme, peuvent présenter une alternance d'au moins deux zones d'intensité différentes par rapport à l'intensité moyenne du faisceau d'arrière-plan, une première zone étant d'intensité plus forte ou plus faible par rapport à cette intensité moyenne et la seconde zone étant respectivement d'intensité plus faible ou plus forte par rapport à cette intensité moyenne. Dans une variante d'exécution, la seconde zone constitue le cœur ou zone centrale du pictogramme et est alors bordée au moins dans une dimension par la première zone.

Ainsi, la perception par le conducteur ou les tiers du message constitué par le pictogramme projeté est renforcée, le temps de réaction par rapport au message projeté est diminué et la sécurité de conduite est de fait améliorée.

Par exemple dans certaines circonstances, l'information du pictogramme peut être plus importante que l'éclairage d'une zone de la route, alors que dans d'autres circonstances, il est préférable de conserver un très bon éclairage de la route tout en y projetant un pictogramme de moindre importance.

L'utilisation d'un faisceau hautement résolu en combinaison avec un faisceau plus faiblement résolu permet de projeter un pictogramme avec l'un tout en pilotant l'éclairage de la zone de projection du pictogramme avec l'autre. Il est alors possible de piloter le contraste mais aussi la luminosité du pictogramme et cela directement en fonction du confort visuel de l'utilisateur par exemple ou de toute autre condition.

Le gradient d'intensité et le niveau d'intensité appliqués peuvent être constants ou varier le long du motif selon une direction de la dimension de projection considérée (largeur ou hauteur, par exemple respectivement de la gauche vers la droite ou depuis le bas vers le haut, correspondant à une projection champ proche du véhicule vers l'horizon).

En outre cette variation peut être statique ou dynamique, c'est-à-dire pilotée en fonction de l'environnement du véhicule : par exemple, en fonction de l'imminence d'un événement, on pourra diminuer ou renforcer dynamiquement le contraste, de sorte à générer un effet d'ondulation du motif qui apparaitra plus ou moins net dans le faisceau d'arrière-plan et à attirer l'attention du conducteur ou des tiers sur l'imminence de l'événement correspondant au pictogramme projeté (flèche de sortie ou de virage, alerte collision, piéton qui traverse, etc...).

La présente invention améliore ainsi encore davantage la sécurité de conduite.

La présente invention permet ainsi de coupler ingénieusement les avantages de deux sources de lumière dont la pixellisation est différente afin de répondre à tous besoin d'éclairage.

En effet la présente invention se propose d'utiliser les avantages de deux technologies distinctes afin de réunir dans un même système d'éclairage les avantages de chacune.

La présente invention concerne aussi un véhicule équipé d'au moins un système selon la présente invention.

Un tel véhicule apporte à son conducteur un confort de lecture de l'écriture de route, ainsi qu'une gestion intelligente des informations projetées relativement à des paramètres environnementaux par exemple.

La présente invention concerne également un procédé d'éclairage pour véhicule comprenant au moins un système d'éclairage selon la présente invention, ledit procédé comprenant au moins les étapes suivantes :
o Mesure par au moins un capteur d'au moins un paramètre de fonctionnement ;
o Réception par au moins une électronique de pilotage de ladite mesure ;
o Envoi par ladite au moins une électronique de pilotage d'au moins un premier signal d'activation et/ou de désactivation d'une partie au moins d'une matrice d'éléments lumineux comprise par au moins un premier dispositif de projection ;
o Envoi par ladite au moins une électronique de pilotage, à destination d'au moins un deuxième dispositif de projection, d'au moins un deuxième signal de projection d'au moins un pictogramme sélectionné parmi une pluralité de pictogrammes dans au moins une base de données en fonction de ladite au moins une mesure.

Un tel procédé permet la mise en oeuvre de la présente invention au niveau d'un système informatique comprenant au moins un processeur, des instructions contenues dans au moins une mémoire non transitoire, et au moins un capteur d'un paramètre extérieur, environnementaux par exemple, ou de position.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

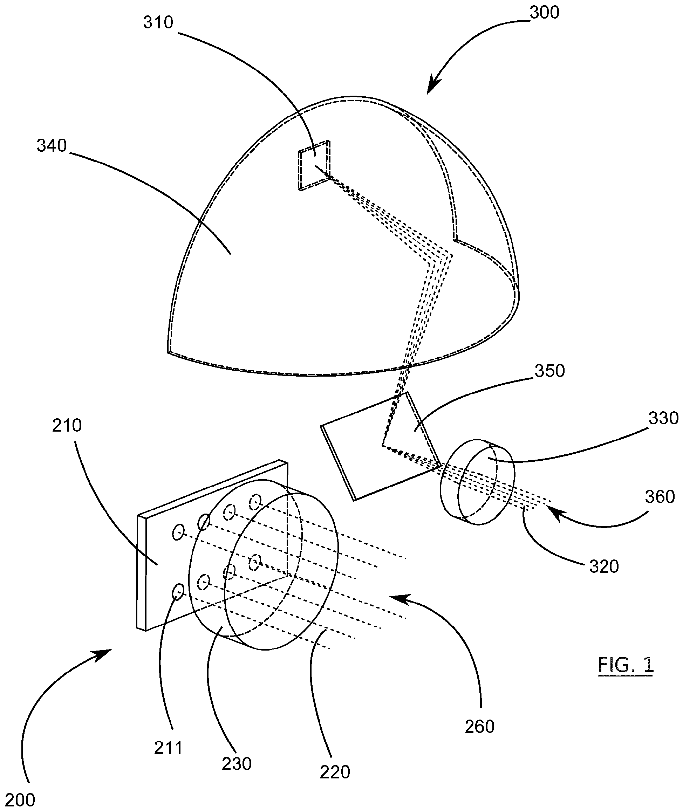

- La figure 1 illustre un système d'éclairage selon un mode de réalisation de la présente invention comprenant un premier dispositif de projection 200 et un deuxième dispositif de projection 300.

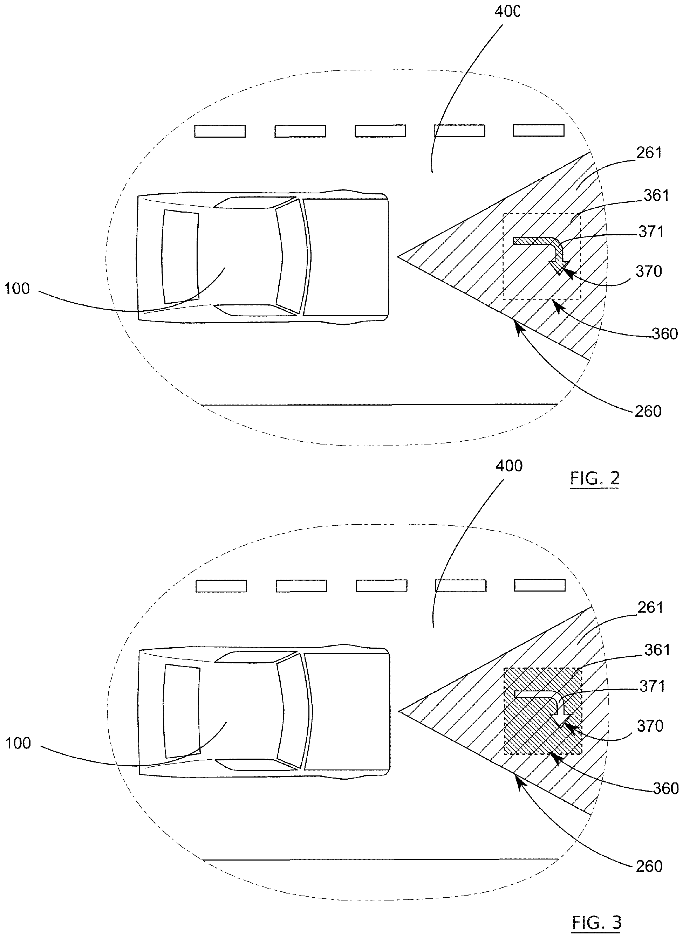

- La figure 2 illustre, selon un mode de réalisation de la présente invention, la projection d'un pictogramme 370 par le deuxième dispositif de projection 300 selon un mode de projection positif dans une zone 261 éclairée par le premier dispositif de projection 200. Dans cette figure la zone intérieure 371 du pictogramme 370 est dite projetée en surimpression avec la première enveloppe de projection 260 du premier dispositif de projection 200, et la zone extérieure 361 du pictogramme 370 est dite projetée en « sous impression » puisqu'elle n'est pas réellement projetée. La deuxième enveloppe de projection 360, générée par le deuxième dispositif 200, est ainsi conformée pour ne définir que le pictogramme 370 et présente donc une zone non éclairée correspondant à la zone extérieure 361 du pictogramme 370.
- La figure 3 illustre, selon un mode de réalisation de la présente invention, la projection d'un pictogramme 370 par le deuxième dispositif de projection 300 selon un mode de projection négatif dans une zone 261 éclairée par le premier dispositif de projection 200. Dans cette figure la zone extérieure 361 du pictogramme 370 est dite projetée en surimpression avec la première enveloppe de projection 260 du premier dispositif de projection 200, et la zone intérieure 371 du pictogramme 370 est dite projetée en « sous impression » puisqu'elle n'est pas réellement projetée. La deuxième enveloppe de projection 360 générée par le deuxième dispositif 200, est ainsi conformée pour ne définir que le pourtour du pictogramme 370 et présente donc une zone non éclairée correspondant à la zone intérieure 371 du pictogramme 370.

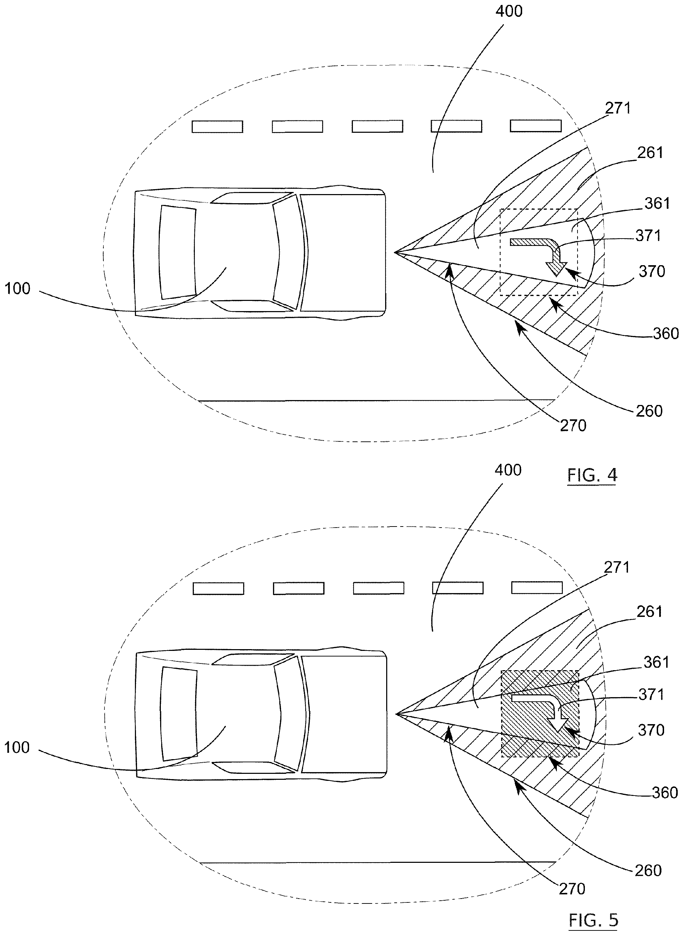

- La figure 4 illustre, selon un mode de réalisation de la présente invention, la projection d'un pictogramme 370 par le deuxième dispositif de projection 300 selon un mode de projection positif dans une zone 271 non éclairée par le premier dispositif de projection 200, autrement dit dans une zone de moindre éclairage, voire de non éclairage, de la première enveloppe de projection 260 du premier dispositif de projection 200. La zone 271 est définie par une sous-enveloppe de projection 270 générée par le premier dispositif de projection 200 et appartient à la première enveloppe de projection 260. Dans cette figure la zone intérieure 371 du pictogramme 370 est éclairée par le deuxième dispositif de projection 200. La deuxième enveloppe de projection 360, générée par le deuxième dispositif 200, est ainsi conformée pour ne définir que le pictogramme 370 et présente donc une zone non éclairée correspondant à la zone extérieure 361 du pictogramme 370.
- La figure 5 illustre, selon un mode de réalisation de la présente invention, la projection d'un pictogramme 370 par le deuxième dispositif de projection 300 selon un mode de projection négatif dans une zone 271 non éclairée par le premier dispositif de projection 200, autrement dit dans une zone de moindre éclairage, voire de non éclairage, de la première enveloppe de projection 260 du premier dispositif de projection 200. La zone 271 est définie par une sous-enveloppe de projection 270 générée par le premier dispositif de projection 200 et appartient à la première enveloppe 260. Dans cette figure la zone extérieure 361 du pictogramme 370 est éclairée par le deuxième dispositif de projection 200. La deuxième enveloppe de projection 360 générée par le deuxième dispositif 200, est ainsi conformée pour ne définir que le pourtour du pictogramme 370 et présente donc une zone non éclairée correspondant à la zone intérieure 371 du pictogramme 370.

Les dessins joints sont donnés à titre d'exemples et ne sont pas limitatifs de l'invention. Ces dessins sont des représentations schématiques et ne sont pas nécessairement à l'échelle de l'application pratique.

Afin de représenter la présente invention de manière simple schématiquement, les figures 2, 3, 4 et 5 ne représentent qu'un cas de mise en oeuvre de la présente invention correspondant à un éclairage de la route provenant du centre du véhicule et non des côtés, cela afin de simplifier la représentation graphique des dessins. La présente invention s'applique naturellement au cas d'un véhicule équipé d'un système d'éclairage orienté vers l'avant du véhicule à droite et/ou à gauche relativement à l'axe de la dimension principale du véhicule.

### DESCRIPTION DETAILLEE DE L'INVENTION

Dans la description qui suit, des numéros de référence similaires seront utilisés pour décrire des concepts similaires à travers des modes de réalisation différents de l'invention.

Sauf indication spécifique du contraire, des caractéristiques techniques décrites en détail pour un mode de réalisation donné peuvent être combinés aux caractéristiques techniques décrites dans le contexte d'autres modes de réalisation décrits à titre exemplaire et non limitatif.

D'une manière générale, la présente invention peut utiliser des sources lumineuses du type diodes électroluminescentes encore communément appelées LEDs. Notamment, ces LEDs peuvent être dotées d'au moins une puce apte à émettre une lumière d'intensité avantageusement ajustable selon la fonction d'éclairage et/ou de signalisation à réaliser. Il peut y avoir plusieurs sources comme cela sera exposé plus en détail ci-après. Par ailleurs, le terme source lumineuse s'entend ici d'un ensemble d'au moins une source élémentaire telle une LED apte à produire un flux conduisant à générer en sortie du dispositif de l'invention au moins un faisceau lumineux de sortie remplissant au moins une fonction souhaitée. Des sources LED sont en particulier avantageuses pour la réalisation de matrice et pour l'éclairage en bandes. D'autres types de sources sont aussi envisageables dans l'invention, telle une ou plusieurs sources laser, notamment pour les dispositifs à micro-miroirs.

Dans les caractéristiques exposées ci-après, les termes relatifs à la verticalité, l'horizontalité et à la transversalité, ou leurs équivalents, s'entendent par rapport à la position dans laquelle le système d'éclairage est destiné à être monté dans un véhicule. Les termes « vertical » et « horizontal » sont utilisés dans la présente description pour désigner des directions, suivant une orientation perpendiculaire au plan de l'horizon pour le terme « vertical », et suivant une orientation parallèle au plan de l'horizon pour le terme « horizontal ». Elles sont à considérer dans les conditions de fonctionnement du dispositif dans un véhicule. L'emploi de ces mots ne signifie pas que de légères variations autour des directions verticale et horizontale soient exclues de l'invention. Par exemple, une inclinaison relativement à ces directions de l'ordre de + ou - 10° est ici considérée comme une variation mineure autour des deux directions privilégiées.

Le terme « bas » ou partie basse s'entend généralement d'une partie d'un élément de l'invention située, suivant un plan vertical, en dessous de l'axe optique. Le terme « haut » ou partie haute s'entend d'une partie d'un élément de l'invention située, suivant un plan vertical, au-dessus de l'axe optique. Le terme « parallèle » ou la notion d'axes ou lignes confondus s'entend ici notamment avec les tolérances de fabrication ou de montage, des directions sensiblement parallèles ou des axes sensiblement confondus entrent dans ce cadre.

Dans la description qui suit, on entend par matrice un tableau comprenant un certain nombre de lignes et un certain nombre de colonnes. Ainsi, une matrice dite (n, p) est un tableau à n lignes et p colonnes. Une matrice est alors dite carrée si son nombre de lignes est égal à son nombre de colonnes. Une matrice est dite verticale si son nombre de lignes est supérieur à son nombre de colonnes. Une matrice est dite horizontale si non nombre de lignes est inférieur à son nombre de colonnes. Dans la présente description, une ligne est comprise comme étant avantageusement horizontale selon la définition de ce terme donnée précédemment, et une colonne est comprise comme étant avantageusement verticale selon la définition de ce terme donnée précédemment.

Le terme « source de lumière pixélisée » ou ses équivalents ont pour définition une source de lumière comprenant une pluralité de dispositifs émetteurs de lumière, comme une matrice de LEDs par exemple, chaque dispositif émetteur de lumière étant pilotable indépendamment des autres dispositifs émetteur de lumière. Il s'agit donc d'une pluralité de sources lumineuses formant une source de lumière pixélisée.

Le terme « faisceau de lumière pixélisée » ou ses équivalents ont pour définition un faisceau lumineux étant formé d'une pluralité de sous faisceaux lumineux, chaque sous faisceau lumineux pouvant être piloté indépendamment des autres sous faisceau lumineux. Ce type de faisceau de lumière pixélisée peut être par exemple réalisé par des systèmes de type matrices à micro-miroirs, des dispositifs à cristaux liquides, ou une technologie de traitement numérique de la lumière (Digital Light Processing (DLP) en termes Anglo-Saxon), ou encore par une ou plusieurs sources de lumière pixélisées, afin par exemple de contrôler la couleur du ou des faisceaux de lumière pixélisée. Chaque sous faisceau pilotable indépendamment forme un rayon pixélisé. A l'inverse d'une source de lumière pixélisée, un faisceau de lumière pixélisé peut comprendre un seul dispositif émetteur de lumière et non une pluralité.

Les termes « enveloppe », « enveloppe de projection » ou leurs équivalents ont pour définition une surface virtuelle définissant un volume d'espace comprenant un ou plusieurs faisceaux lumineux émis depuis un unique dispositif de projection. Ainsi à chaque dispositif de projection correspond une enveloppe de projection dans laquelle s'inscrit le (ou les) faisceau(x) à projeter.

Une surface ou une zone de projection est définie comme étant une surface délimitée par l'intersection entre une enveloppe de projection et un décor (environnant le véhicule comme une partie de chaussée ou un bas-côté), par exemple le décor faisant face au véhicule. Ainsi une zone de projection a pour définition la surface pouvant être éclairée par un dispositif de projection considéré.

Le terme « taux de recouvrement » ou ses équivalents ont pour définition le rapport de la surface, ou la zone, pouvant être éclairée et commune, ou du volume pouvant être éclairé et commun, à deux enveloppes de projection, avec la surface totale la plus petite, ou le volume total le plus petit, correspondant à l'une ou l'autre des enveloppes de projection. Ce taux est égal à 100% dans le cas où la plus petite surface, ou zone, pouvant être éclairée par l'un des deux dispositifs de projection est totalement englobée dans la surface pouvant être éclairée par l'autre dispositif de projection. Ce taux de recouvrement est donc compris entre 0% et 100%.

On entend par « pictogramme » ou ses équivalents un dessin ou motif figuratif ou symbolique reproduisant le contenu d'un message sans se référer à sa forme linguistique, il peut ainsi s'agir d'une flèche, d'un symbole issu du code de la route, d'un icone ou de toute autre forme représentative d'une information. Par exemple, un pictogramme peut ainsi être informatif, ou plus fonctionnel, tel que des lignes reconstruites par l'éclairage, mais il peut également prendre des formes plus cognitives.

Avant d'entamer une revue détaillée de modes de réalisation de l'invention, sont énoncées ci-après des caractéristiques optionnelles qui peuvent éventuellement être utilisées en association ou alternativement :
- Ledit au moins un deuxième dispositif de projection est configuré pour projeter ledit au moins un pictogramme selon au moins un mode de projection positif correspondant à une projection lumineuse de une zone intérieure dudit au moins un pictogramme.
   Cela permet de disposer d'un mode de projection dit positif où la deuxième enveloppe de projection correspond au pictogramme. De plus en pilotant le premier dispositif de projection, il est possible de combiner ce mode de projection positif avec l'éclairage ou non d'une zone de projection de la première enveloppe de projection afin de contrôler plus précisément le contraste et la qualité d'affichage du pictogramme.
- Ledit au moins un premier dispositif de projection est configuré pour coopérer avec ledit au moins un deuxième dispositif de projection de manière à produire un éclairage d'une partie au moins de ladite au moins une zone de recouvrement lorsque ledit au moins un pictogramme est projeté par ledit au moins un deuxième dispositif de projection selon ledit au moins un mode de projection positif.
- Ledit au moins un premier dispositif de projection est configuré pour coopérer avec ledit au moins un deuxième dispositif de projection de manière à produire un moindre éclairage, de préférence une absence d'éclairage, d'une partie au moins de ladite au moins une zone de recouvrement par rapport à l'éclairage de la zone intérieure dudit au moins un pictogramme, lorsque ledit au moins un pictogramme est projeté par ledit au moins un deuxième dispositif de projection selon ledit au moins un mode de projection positif, et en produisant un éclairage dans au moins une partie de ladite au moins une première enveloppe de projection en dehors de la zone intérieure dudit au moins un pictogramme.
- Ledit au moins un deuxième dispositif de projection est configuré pour projeter ledit au moins un pictogramme selon au moins un mode de projection négatif correspondant à une projection lumineuse d'une zone extérieur dudit au moins un pictogramme.
   Cela permet alors de disposer d'un mode de projection dit négatif où le pourtour du pictogramme est projeté. De plus en pilotant le premier dispositif de projection, il est alors possible de combiner ce mode de projection négatif avec l'éclairage ou non d'une zone de projection de la première enveloppe de projection afin de contrôler plus précisément le contraste et la qualité d'affichage du pictogramme.
- Ledit au moins un premier dispositif de projection est configuré pour coopérer avec ledit au moins un deuxième dispositif de projection de manière à produire un éclairage d'une partie au moins de ladite au moins une zone de recouvrement lorsque ledit au moins un pictogramme est projeté par ledit au moins un deuxième dispositif de projection selon ledit au moins un mode de projection négatif.
- Ledit au moins un premier dispositif de projection est configuré pour coopérer avec ledit au moins un deuxième dispositif de projection de manière à produire un moindre éclairage, de préférence une absence d'éclairage, d'une partie au moins de ladite au moins une zone de recouvrement par rapport à l'éclairage de la zone extérieure dudit au moins un pictogramme, lorsque ledit au moins un pictogramme est projeté par ledit au moins un deuxième dispositif de projection selon ledit au moins un mode de projection négatif, et en produisant un éclairage dans au moins une partie de ladite au moins une première enveloppe de projection en dehors de la zone extérieure dudit au moins un pictogramme.
- Ledit au moins un premier dispositif de projection est configuré pour éclairer ou ne pas éclairer certaines zones de projection de ladite au moins une première enveloppe de projection.
   Cela permet d'éclairer ou non certaines zones de la route et ainsi d'apporter un degré de liberté supplémentaire permettant d'ajuster la visibilité du pictogramme projeté sur une zone selon que celle-ci soit éclairée ou non, la projection du pictogramme pouvant être positive ou négative.
- Ledit au moins un premier dispositif de projection comprend au moins une matrice d'éléments lumineux configurée pour former ladite au moins une source de lumière pixélisée.
   Cela permet de disposer d'une pluralité de sources lumineuses définissant une matrice de sorte à diviser en plusieurs zones de projection l'enveloppe de projection du premier dispositif de projection.
- Ladite au moins une matrice d'éléments lumineux est une matrice dont le nombre de colonnes est supérieur ou égal au nombre de lignes.
- Ladite au moins une matrice d'éléments lumineux comprend au moins 2 éléments lumineux, de préférence au moins 8 éléments lumineux, et avantageusement au moins 100 éléments lumineux.
- Lesdits éléments lumineux de ladite au moins une matrice sont configurés pour être individuellement pilotés.
   Cela permet de disposer d'une pluralité de sources lumineuses définissant une matrice de sorte à diviser en zones de projection l'enveloppe de projection du premier dispositif de projection.
- Ledit au moins un deuxième dispositif de projection comprend au moins une première matrice de micro-miroirs configurée pour former ledit au moins un faisceau de lumière pixélisé à partir d'au moins une source lumineuse.
   Cela permet de disposer d'un faisceau de lumière hautement pixélisé et ainsi de projeter un pictogramme et/ou le contour d'un pictogramme selon que le mode de projection positif ou négatif soit utilisé.
- Ledit au moins un deuxième dispositif de projection comprend au moins une deuxième matrices de micro-miroirs.
   Cela permet de disposer de deux faisceaux de lumière hautement pixélisés, l'un pouvant servir à la projection de pictogramme par exemple, et l'autre à la projection de feux de croisement par exemple, ou bien encore à augmenter la résolution et/ou la taille d'un pictogramme projeté, ou bien à projeter deux pictogrammes simultanément.
- Ladite au moins une première matrice de micro-miroirs et ladite au moins une deuxième matrice de micro-miroirs sont configurées pour former ledit au moins un faisceau de lumière pixélisé.
   Cela permet d'augmenter la résolution du pictogramme projeté.
- Ladite au moins une première matrice de micro-miroirs et ladite au moins une deuxième matrice de micro-miroirs sont configurées pour former respectivement au moins un premier sous-faisceau de lumière pixélisé et au moins un deuxième sous-faisceau de lumière pixélisé, ledit au moins un premier sous-faisceau de lumière pixélisé et ledit au moins un deuxième sous-faisceau de lumière pixélisé étant configurés pour former ledit au moins un faisceau de lumière pixélisé.
   Cela permet de disposer de deux faisceaux de lumière hautement pixélisés, l'un pouvant servir à la projection de pictogramme par exemple, et l'autre à la projection de feux de croisement par exemple.
- Ladite au moins une zone de recouvrement correspond à un taux de recouvrement entre ladite au moins une première enveloppe de projection et ladite au moins une deuxième enveloppe de projection compris entre 0% et 100%, avantageusement entre 30% et 70% et de préférence égal à 50%.
- Le nombre de pixels de ladite au moins une source de lumière pixélisée est inférieur au nombre de pixels dudit au moins un faisceau de lumière pixélisé. Cela permet de disposer d'un système d'éclairage ayant les avantages d'une source de lumière faiblement pixélisé et d'un faisceau hautement pixélisé. La puissance ainsi que la précision sont donc disponibles afin d'assurer la bonne visibilité des pictogrammes projetés et cela de manière dynamique relativement aux conditions de visibilité pour le conducteur.
- Le rapport entre le nombre de pixels de ladite au moins une source de lumière pixélisée et le nombre de pixels dudit au moins un faisceau de lumière pixélisé est inférieur à 200, de préférence à 50, et avantageusement à 3.
- Le rapport entre le nombre de pixels de ladite au moins une source de lumière pixélisée et le nombre de pixels dudit au moins un faisceau de lumière pixélisé est compris entre 200 et 3, de préférence entre 50 et 3, et avantageusement égal à 50.
- Ledit au moins un premier dispositif de projection et ledit au moins un deuxième dispositif de projection comprennent chacun un dioptre de sortie. Cela permet d'adapter le dioptre de sortie aux caractéristiques optiques du dispositif considéré.
- Ledit au moins un premier dispositif de projection et ledit au moins un deuxième dispositif de projection présentent un dioptre de sortie commun.
   Cela permet de de concevoir un système d'éclairage compact et simple.
- Ledit au moins un premier dispositif de projection est piloté par une électronique de pilotage de sorte à piloter ladite au moins une source de lumière pixélisée selon au moins un paramètre de fonctionnement.
   L'électronique de pilotage permet ainsi d'utiliser pleinement l'ensemble des degrés de liberté autorisés par la présente invention.
- Ledit au moins un deuxième dispositif de projection est piloté par une électronique de pilotage de sorte à modifier ladite au moins une deuxième enveloppe de projection selon au moins un paramètre de fonctionnement. Cette électronique de pilotage permet de modifier les propriétés de réflexion de la matrice de micro-miroirs afin de les adapter aux besoins d'éclairement.
- Ledit au moins un deuxième dispositif de projection est piloté par une électronique de pilotage de sorte à modifier ledit au moins un pictogramme selon au moins un paramètre de fonctionnement.
- Ledit au moins un paramètre de fonctionnement est au moins un paramètre pris parmi : détection de changement de direction de la route, détection d'une donnée de localisation, détection de précipitations, détection de la luminosité de l'environnement de la route, détection de véhicule suivi, détection de véhicule croisé, détection de danger imminent, détection d'objet traversant devant le véhicule (par exemple : piéton, animaux), détection de zone de travaux, détection de panneaux de signalisation, détection de ralentissement, détection d'accident, détection des conditions météorologiques, détection d'autres utilisateurs de la route.
   Cela permet de piloter les dispositifs de projection en fonction de paramètres extérieurs et ainsi d'optimiser l'affichage de pictogrammes sur la route en fonction des conditions de routes, mais également de définir le type de pictogramme à être projeté en fonction également des conditions de routes par exemple.
- Ledit au moins un pictogramme est pris parmi : une flèche, un mot, des lignes horizontales ou verticales, des motifs animés, des projections dynamiques. Cela permet d'afficher divers types d'information sur la route à destination de l'utilisateur mais également de toute personne apte à visualiser le pictogramme.

La présente invention trouve pour domaine préférentiel d'application l'industrie automobile, pour l'équipement de véhicules, en particulier pour la réalisation de dispositifs d'éclairage.

La présente invention permet en effet une meilleure précision et de plus nombreux degrés de liberté dans l'écriture de route. L'écriture de route est aujourd'hui plus que jamais un aspect mis en avant par de nombreux fabricants d'équipements automobiles. Les nouvelles technologies développées ces dernières années permettent en effet de projeter sur la route des informations à destination du conducteur mais également des autres usagers. Cependant, comme discuté avant, les solutions actuelles présentent des avantages relativement aux anciennes technologies d'éclairage mais parallèlement présentent également de moindre performance dans d'autres domaines, dans des situations où l'écriture de route n'est pas nécessaire par exemple, ou lorsque les conditions de visibilité rendent difficile la lisibilité de l'écriture de route des systèmes actuels.

Ainsi dans un souci de résoudre en partie au moins ces problématiques, la présente invention propose avantageusement un système d'éclairage ingénieux bénéficiant des avantages d'une pluralité de technologies, combinées ensemble dans une architecture innovante assurant ainsi toutes les fonctions dont un système d'éclairage puisse avoir besoin tout en disposant de degrés de liberté supplémentaires afin de satisfaire aux conditions de visibilité, de lisibilité et de conduite.

Concilier anciennes et nouvelles technologies n'est jamais facile, et la présente invention propose une solution aussi nouvelle qu'inventive afin de satisfaire aux exigences d'éclairage d'aujourd'hui, d'hier et de demain.

Nous allons à présent décrire la présente invention au travers des figures 1 à 5 servant d'exemples non limitatifs afin d'illustrer certains modes de réalisation de la présente invention.

La figure 1 illustre, selon un mode de réalisation de la présente invention, un premier dispositif de projection 200 d'une source de lumière pixélisée 220, et un deuxième dispositif de projection 300 d'un faisceau de lumière pixélisé 320.

Dans la présente invention, comme indiqué plus tôt, une source de lumière pixélisée se distingue d'un faisceau de lumière pixélisé en ce sens que la pixellisation de la source de lumière pixélisée provient du fait qu'elle comprend une pluralité d'émetteurs lumineux, alors qu'à l'inverse la pixellisation du faisceau de lumière pixélisé provient du fait qu'il comprend une pluralité de faisceau lumineux alors même que cette pluralité de faisceaux lumineux provient d'une seule source de lumière non pixélisée.

Comme illustré par le mode de réalisation de la figure 1, le premier dispositif de projection 200 peut comprendre au moins une matrice 210 d'éléments lumineux 211 et au moins un dioptre de sortie 230 configuré pour conformer la lumière pixélisée 220 émise par la matrice 210 d'éléments lumineux 211 de sorte à définir une première enveloppe de projection 260. De manière avantageuse, ce dioptre de sortie 330 peut être une lentille convergente par exemple.

De manière avantageuse, les éléments lumineux 211 sont des LEDs ou tous autres types d'émetteurs lumineux, de préférence pilotables individuellement.

Selon un mode de réalisation, la longueur de la matrice 210 d'éléments lumineux 211, c'est-à-dire le nombre de colonnes qu'elle comporte, est comprise entre 2 et 100, de préférence entre 10 et 50 et avantageusement égale à 10.

Selon un mode de réalisation, la largeur de la matrice de 210 d'éléments lumineux 211, c'est-à-dire le nombre de lignes qu'elle comporte, est comprise entre 2 et 100, de préférence entre 10 et 50 et avantageusement égale à 10.

Préférentiellement, la matrice 210 d'éléments lumineux 211 est une matrice horizontale, c'est-à-dire comprenant un nombre de colonnes supérieur à son nombre de lignes.

Selon un mode de réalisation, la source de lumière pixélisée peut aussi comprendre ou être constituée de modules séparés constitués chacun d'une source de lumière, ayant chacun leur dioptre de sortie et étant chacun pilotable indépendamment.

De manière préférentielle, chaque élément lumineux 211 de la matrice 210 est pilotable individuellement par une électronique de pilotage en fonction d'au moins un paramètre de fonctionnement. Ce pilotage peut consister dans la variation de l'intensité lumineuse, pouvant être nulle, produite par un ou plusieurs éléments lumineux 211, ou le positionnement d'un cache ou de tous types d'élément permettant d'amoindrir la luminosité de la lumière produite par un ou plusieurs éléments lumineux 211, et/ou d'interrompre le parcours de la lumière depuis un ou plusieurs éléments lumineux 211 vers le dioptre de sortie 230, ou plus généralement vers l'extérieur du véhicule. Le pilotage de la matrice 210 est décrit dans la suite de la présente description.

Avantageusement, le pilotage de la matrice 210 permet de conformer la première enveloppe de projection 260 et par la même une première zone de projection. En effet, le pilotage de la matrice 210 permet de produire un éclairage et/ou un moindre éclairage, voire une absence d'éclairage, d'au moins une partie de la première zone de projection délimitée par la première enveloppe de projection 260. Il est ainsi possible par exemple d'éteindre ou de diminuer l'intensité lumineuse des éléments lumineux 211 de la matrice 210 de sorte à réduire l'éclairage, voire le couper, d'une portion uniquement de l'enveloppe de projection 260, et donc de la zone de projection. Dans les figures 2 à 5, la zone éclairée de la première enveloppe de projection 260 est référencée 261, tandis que la zone de moindre éclairage, voire de non éclairage, de la première enveloppe de projection 260 est référencée 271, et peut se définir par une sous-enveloppe de projection 270.

La présente invention permet, par ce pilotage, l'éclairage ou non de certaines parties du décor, du paysage, se trouvant face au véhicule par exemple.

Comme illustré par le mode de réalisation de la figure 1, le deuxième dispositif de projection 300 peut comprendre au moins un DMD, c'est-à-dire un dispositif à micro-miroirs, également appelé une matrice à micro-miroirs 350 et au moins un dioptre de sortie 330 configuré pour conformer le faisceau de lumière pixélisé 320 formé par la matrice de micro-miroirs 350 de sorte à définir une deuxième enveloppe de projection 360.

Ce deuxième dispositif de projection 300 comprend au moins une source lumineuse 310, pouvant être par exemple au moins une LED ou au moins une diode laser, ou toute sorte de sources lumineuses. Cette source lumineuse 310 émet un faisceau lumineux avantageusement en direction d'un réflecteur 340. Ce réflecteur 340 est de préférence configuré pour concentrer le flux de lumière incident sur une surface comportant la matrice de micro-miroirs 350.

De manière avantageuse, le réflecteur 340 est configuré pour que l'ensemble des micro-miroirs 350 soient éclairés par le faisceau lumineux réfléchi par le réflecteur 340. Le réflecteur 340 peut avoir, suivant au moins un plan de section, un profil pseudo elliptique ou pseudo parabolique.

Selon un mode de réalisation, la longueur de la matrice de micro-miroirs 350, c'est-à-dire le nombre de colonnes qu'elle comporte, est comprise entre 2560 et 864, de préférence entre 2560 et 864 et avantageusement égale à 1150.

Selon un mode de réalisation, la largeur de la matrice de micro-miroirs 350, c'est-à-dire le nombre de lignes qu'elle comporte, est comprise entre 1600 et 480, de préférence entre 1150 et 480 et avantageusement égale à 1150.

Une fois réfléchi par une partie au moins des micro-miroirs 350, le faisceau lumineux passe au travers d'un dioptre de sortie 330. De manière avantageuse, ce dioptre de sortie 330 peut être une lentille convergente par exemple.

Comme indiqué, après réflexion du faisceau lumineux sur le réflecteur 340, celui-ci vient se concentrer sur la matrice de micro-miroirs 350. De manière préférentielle, les micro-miroirs disposent chacun de deux positions de fonctionnement, une position dite active dans laquelle ils réfléchissent le faisceau lumineux incident en direction du dioptre de sortie 330, et une position dite passive dans laquelle ils réfléchissent le faisceau lumineux incident en direction d'un élément absorbeur de rayonnement lumineux non représenté dans la figure 1. De manière préférentielle, chaque micro-miroirs de la matrice de micro-miroirs 350 est pilotable individuellement par une électronique de pilotage en fonction d'au moins un paramètre de fonctionnement. Le pilotage de la matrice de micro-miroirs 350 est décrit dans la suite de la présente description

Ce deuxième dispositif de projection 300 permet de disposer en sortie du dioptre de sortie 330 d'un faisceau lumineux hautement résolu et pixélisé de sorte que chaque pixel ou rayon pixélisé composant ce faisceau correspond à un micro-miroir, il est alors possible d'activer ou non ces micro-pixels en simplement pilotant les micro-miroirs 350. Cette particularité permet alors de piloter au besoin la forme du faisceau lumineux en sortie du dioptre de sortie 330 selon les besoins de l'invention.

Avantageusement, la présente invention permet de réaliser une écriture de route, il s'agit de la projection dans le champ de vision du conducteur d'un pictogramme 370. Cette projection peut être réalisée au niveau de la route 400, sur le côté, au-dessus ou en-dessous de l'horizon par exemple non limitatif. Le pilotage des micro-miroirs 350 permet de dessiner des pictogrammes 370 de haute résolution, la résolution du pictogramme 370 étant directement égale au nombre de micro-miroirs 350 activés pour le dessiner, c'est-à-dire en position active.

Lorsque le deuxième dispositif de projection 300 est utilisé pour projeter un pictogramme 370, certains des micro-miroirs sont en position passive et d'autre en position active.

On entend par mode de projection positif, le cas où la zone intérieure 371 du pictogramme 370 correspond aux micro-miroirs en position active et où la zone extérieure 361 du pictogramme 370 correspond aux micro-miroirs en position passive. Cela signifie que seul l'intérieur du pictogramme 370 est projeté par le deuxième dispositif de projection 300, la deuxième enveloppe de projection 360 est ainsi conformée pour ne définir que le pictogramme 370 et présente donc une zone non éclairée correspondant à la zone extérieure 361 du pictogramme 370. Cette situation est particulièrement bien illustrée par les figures 2 et 4 décrites dans la suite de la description.

On entend par mode de projection négatif, le cas où la zone extérieure 361 du pictogramme 370 correspond aux micro-miroirs en position active et où la zone intérieure 371 du pictogramme 370 correspond aux micro-miroirs en position passive. Cela signifie que seul le pourtour du pictogramme 370 est projeté par le deuxième dispositif de projection 300, la deuxième enveloppe de projection 360 est ainsi conformée pour ne définir que le pourtour du pictogramme 370 et présente donc une zone non éclairée correspondant à la zone intérieure 371 du pictogramme 370. Cette situation est particulièrement bien illustrée par les figures 3 et 5 décrites dans la suite de la description.

De manière particulièrement avantageuse, la grande dynamique des micro-miroirs 350, ainsi que leur haute densité, permettent de former rapidement des pictogrammes 370 de haute résolution. Chaque micro-miroir en position active est un pixel du pictogramme 370 projeté, que cela soit dans le mode positif relativement à la zone intérieure 371 du pictogramme 370, comme dans le mode négatif relativement à la zone extérieure 361 du pictogramme 370.

Ces deux modes sont plus longuement discutés et illustrés ci-après au travers des figures 2 à 5.

Selon un mode de réalisation, le deuxième dispositif de projection 300 comprend une première matrice de micro-miroirs et une deuxième matrice de micro-miroirs. Ces deux matrices de micro-miroirs sont par exemple configurées pour former respectivement au moins un premier sous-faisceau de lumière pixélisé et au moins un deuxième sous-faisceau de lumière pixélisé.

Avantageusement, le premier sous-faisceau de lumière pixélisé et le deuxième sous-faisceau de lumière pixélisé sont configurés pour former ledit faisceau de lumière pixélisé 320.

Selon un mode de réalisation chacune des deux matrices de micro-miroirs dispose d'un dioptre de sortie.

Selon un autre mode de réalisation, les deux matrices de micro-miroirs ont au moins un dioptre de sortie en commun.

L'utilisation de deux matrices de micro-miroirs apporte à la présente invention de nombreux degrés de liberté supplémentaires. En effet, cette deuxième matrice de micro-miroirs peut permettre, par exemple, les situations suivantes :
o La première matrice de micro-miroirs peut servir à projeter des pictogrammes lorsque la deuxième matrice de micro-miroirs peut être utilisée pour la projection de feux de croisement ;
o Les deux matrices de micro-miroirs peuvent être utilisées conjointement afin de réaliser des pictogrammes de plus grande dimension ;
o Un décalage entre les sous-faisceaux de lumière pixélisés peut être appliqué ainsi que des filtres de couleur ou de polarisation de sorte à produire un pictogramme tridimensionnel, chaque sous-faisceau servant de référence à un œil distinct de l'utilisateur ;
o Chacune des deux matrices de micro-miroirs peut projeter un pictogramme différent l'une de l'autre.
o Chacune des deux matrices de micro-miroirs peut occuper une moitié de l'espace de projection 260, que ce soit selon la dimension horizontale ou verticale ;
o Chacune des deux matrices de micro-miroirs peut projeter une couleur distincte, par exemple un faisceau blanc et un faisceau de couleur, avantageusement vert.

Selon un mode de réalisation préféré de la présente invention, la première enveloppe de projection 260 définie par la source de lumière pixélisée 220, et la deuxième enveloppe 360 définie par le faisceau de lumière pixélisé présentent au moins une zone de recouvrement l'une avec l'autre. Ce recouvrement peut être défini selon deux représentations équivalentes : l'une tridimensionnelle et l'autre bidimensionnelle.

L'approche tridimensionnelle consiste à définir la zone de recouvrement comme un volume de l'espace appartenant à la fois au volume d'espace définit par la première enveloppe de projection 260 et appartenant en même temps au volume d'espace défini par la deuxième enveloppe de projection 360.

L'approche bidimensionnelle consiste à illustrer cette zone de recouvrement comme une surface bidimensionnelle, il s'agit en effet d'une surface éclairée à la fois par le premier dispositif de projection 200 et par le deuxième dispositif de projection 300.

Avantageusement cette zone de recouvrement se trouve au centre de la plus grande zone éclairée parmi la zone éclairée par le premier dispositif de projection 200 et la zone éclairée par le deuxième dispositif de projection 300.

Le taux de recouvrement, selon sa définition donnée précédemment, est donc compris entre 100% et 0%, de préférence entre 60% et 20% et avantageusement entre 50% et 30%.

De préférence, le premier dispositif de projection 200 éclaire une zone plus grande que la zone éclairée par le deuxième dispositif de projection 300.

Selon un mode de réalisation préféré, l'ensemble de l'enveloppe de projection 360 du deuxième dispositif de projection 300 est comprise dans l'enveloppe de projection 260 du premier dispositif de projection 200. Le taux de recouvrement est alors égal à 100%.

Selon un mode de réalisation, le premier dispositif de projection 200 et le deuxième dispositif de projection 300 utilisent un dioptre de sortie commun. Ce mode de réalisation permet d'augmenter la compacité du présent système d'éclairage ainsi que sa robustesse.

Nous allons désormais décrire les figures 2 à 5 illustrant, selon un mode de réalisation de la présente invention, quatre situations de projection d'un pictogramme 370 par le deuxième dispositif de projection 300 en coopération avec le premier dispositif de projection 200.

Sur la figure 2, le véhicule 100 se déplaçant sur une route 400 comprend un premier dispositif de projection 200 et un deuxième dispositif de projection 300.

La zone de projection 261 correspond à la surface totale de projection pouvant être éclairée par le premier dispositif de projection 200, cette zone est définie par la première enveloppe de projection 260.

La zone totale de projection définie par l'addition des zones 361 et 371 correspond à la surface totale de projection pouvant être éclairée par le deuxième dispositif de projection 300, cette zone est définie par la deuxième enveloppe de projection 360.

La figure 2 illustre le cas d'un mode de projection positif d'un pictogramme 370 par le deuxième dispositif de projection 300. Il s'agit donc d'une situation où la zone intérieure 371 du pictogramme 370 est projetée par le deuxième dispositif 300, et où la zone extérieure 361 du pictogramme 370 n'est pas projetée, c'est-à-dire qu'elle n'est pas éclairée.

Dans le cas de la figure 2, le taux de recouvrement de la zone de projection 261 du premier dispositif de projection 200 avec la zone intérieure 371 du pictogramme 370 est égal à 100%. En effet, le pictogramme 370 est intégralement projeté dans la zone de projection 261 du premier dispositif de projection 200.

Comme indiqué précédemment, et décrit par la suite, le premier dispositif de projection 200 est pilotable de sorte à former des zones de moindre éclairage, voire de non éclairage.

La situation représentée par la figure 2 correspond à une projection en mode positif d'un pictogramme 370 par le deuxième dispositif 300 dans la zone de projection 261 éclairée par le premier dispositif 200. Le pictogramme 370 est projeté sur une zone déjà éclairée.

Ce mode de réalisation permet ainsi à la présente invention de projeter un pictogramme 370 dans une zone 261 déjà éclairée de sorte à ne pas perdre l'éclairage de la route 400 tout en y projetant une information sous la forme d'un pictogramme 370.

Cette situation peut par exemple être particulièrement intéressante dans le cas où le pictogramme 370 projeté est un pictogramme correspondant à une information de moindre importance relativement à l'éclairage de la route 400, ou encore au cas où les conditions météorologiques font que ce mode de réalisation est le plus apte à permettre au conducteur de visualiser correctement le pictogramme 370 projeté.

Par exemple, le pictogramme 370 peut être une flèche allant vers l'avant du véhicule 100 de sorte à renforcer l'éclairage de la route 400 dans une zone précise pour que le conducteur puisse se concentrer particulièrement sur cette zone.

Le pictogramme 370 peut avoir pour fonction l'affichage d'une information, mais également le renforcement de l'éclairage selon une forme géométrique particulière de sorte à accroitre la concentration du conducteur sur cette zone de la route 400.

La figure 3 illustre le cas d'un mode de projection négatif d'un pictogramme 370 par le deuxième dispositif de projection 300. Il s'agit donc d'une situation où la zone extérieure 361 du pictogramme 370 est projetée par le deuxième dispositif 300, et où la zone intérieure 371 du pictogramme 370 n'est pas projetée, c'est-à-dire qu'elle n'est pas éclairée.

Dans le cas de la figure 3, le taux de recouvrement de la zone de projection 261 du premier dispositif de projection 200 avec la zone extérieure 361 du pictogramme 370 est égal à 100%. En effet, le contour du pictogramme 370 est intégralement projeté dans la zone de projection 261 du premier dispositif de projection 200.

La situation représentée par la figure 3 correspond à une projection en mode négatif d'un pictogramme 370 par le deuxième dispositif 300 dans la zone de projection 261 éclairée par le premier dispositif 200. L'image en négatif du pictogramme 370 est projetée sur une zone déjà éclairée.

Ce mode de réalisation permet ainsi à la présente invention de projeter une image en négatif d'un pictogramme 370 dans une zone déjà éclairée de sorte à ne pas perdre l'éclairage de la route 400 tout en y projetant une information sous la forme d'un pictogramme 370.

Tout comme pour le cas de la figure 2, cette situation peut par exemple être particulièrement intéressante dans le cas où le pictogramme 370 projeté en négatif est un pictogramme correspondant à une information de moindre importance relativement à l'éclairage de la route 400, ou encore au cas où les conditions météorologiques font que ce mode de réalisation est le plus apte à permettre au conducteur de visualiser correctement le pictogramme 370 projeté, et cela selon le mode de projection en négatif.

Dans certaines situations d'éclairage de la route 400, que cela soit dû à la météo ou encore à l'éclairage publique de la route 400, la projection selon le mode négatif du pictogramme 370 peut apporter au conducteur une meilleure visibilité du pictogramme 370 et/ou de la zone intérieure du pictogramme 370.

Sur la figure 4, le véhicule 100 se déplaçant sur une route 400 comprend un premier dispositif de projection 200 et un deuxième dispositif de projection 300.

Comme précédemment, la zone de projection 261 correspond à la surface totale de projection pouvant être éclairée par le premier dispositif de projection 200, cette zone est définie par la première enveloppe de projection 260.

Toutefois, dans le cas de la figure 4, une zone de projection 271 de moindre éclairage, de préférence de non éclairage, définie par la sous-enveloppe 270 est représentée. Cette zone de projection 271 de non éclairage correspond à une zone d'éclairage dont les éléments lumineux 211 correspondant du premier dispositif de projection 200 sont pilotés de sorte à réduire la luminosité de la lumières qu'ils émettent, voire de la couper par exemple. Dans le cas d'une coupure, électronique et/ou mécanique, de l'émission lumineuse de ces émetteurs lumineux, la zone de projection 271 est alors sans éclairage. La sous-enveloppe de projection 270 définit alors une zone sombre dans la zone de projection 261 du premier dispositif de projection 200.

De manière avantageuse, la zone de projection 271 peut être l'une quelconque des zones appartenant à la zone de projection 261 définie par la première enveloppe 260. En effet, la première enveloppe 260 définit un volume dans lequel est contenue la sous-enveloppe 270 définissant la zone de projection 271.

Ainsi, la zone de projection 271 peut être au minimum nulle et au maximum égale à la zone de projection 261.

Comme dans le cas de la figure 2, la zone totale de projection définie par l'addition des zones 361 et 371 correspond à la surface totale de projection pouvant être éclairée par le deuxième dispositif de projection 300.

Dans la figure 4, de manière similaire à la figure 2 précédente, le mode de projection est un mode de projection positif d'un pictogramme 370 par le deuxième dispositif de projection 300. Il s'agit donc de la situation où la zone intérieure 371 du pictogramme 370 est projetée par le deuxième dispositif 300, et où la zone extérieure 361 du pictogramme 370 n'est pas projetée, c'est-à-dire qu'elle n'est pas éclairée.

Dans le cas de la figure 4, le taux de recouvrement de la zone de projection 261 du premier dispositif de projection 200 avec la zone intérieure 371 du pictogramme 370 est égal à 0%. En effet, le pictogramme 370 est intégralement projeté dans la zone de projection 271 du premier dispositif de projection 200 correspondant à la zone de non éclairage.

Dans le cas où la zone de projection 271 serait simplement de moindre éclairage, le taux de recouvrement serait de nouveau égal à 100%. Mais dans le cas de la figure 4, la zone 271 n'est pas éclairée par le premier dispositif de projection 200.

Comme indiqué précédemment, le premier dispositif de projection 200 est pilotable de sorte à former des zones non éclairées.

La situation représentée par la figure 4 correspond à une projection en mode positif d'un pictogramme 370 par le deuxième dispositif 300 dans la zone de projection 271 non éclairée par le premier dispositif 200. Le pictogramme 370 est projeté sur une zone de la route non éclairée par le premier dispositif de projection 200.

Ce mode de réalisation permet ainsi à la présente invention de projeter un pictogramme 370 dans une zone sombre de sorte à renforcer son contraste, et à rendre le pictogramme 370 beaucoup plus visible par le conducteur.

Cette situation peut par exemple être particulièrement intéressante dans le cas où le pictogramme 370 projeté est un pictogramme correspondant à une information de haute importance relativement à l'éclairage de la route 400, ou encore au cas où les conditions météorologiques font que ce mode de réalisation est le plus apte à permettre au conducteur de visualiser correctement le pictogramme 370 projeté.

Par exemple, le pictogramme 370 peut être une flèche allant vers la droite relativement au véhicule 100 de sorte à indiquer précisément au conducteur qu'il doit tourner à droite à la prochaine intersection. Cette information peut également être une signalisation de la vitesse autorisée par exemple de sorte à indiquer au conducteur de réduire sa vitesse selon les réglementations.

Par exemple, un système de localisation du véhicule 100 peut déterminer la position du véhicule 100 relativement à un tronçon de la route 400 et détecter à partir d'une base de données les réglementations en termes de vitesses par exemple et projeter à destination du conducteur des informations relatives à ces réglementations sous la forme de pictogrammes 370.

La figure 5 illustre le cas d'un mode de projection négatif d'un pictogramme 370 par le deuxième dispositif de projection 300. Comme dans le cas de la figure 3, Il s'agit de la situation où la zone extérieure 361 du pictogramme 370 est projetée par le deuxième dispositif 300, et où la zone intérieure 371 du pictogramme 370 n'est pas projetée, c'est-à-dire qu'elle n'est pas éclairée.

Dans le cas de la figure 5, le taux de recouvrement de la zone de projection 261 du premier dispositif de projection 200 avec la zone extérieure 361 du pictogramme 370 est égal à 0%. En effet, le contour du pictogramme 370 est intégralement projeté dans la zone de projection 271 non éclairée par le premier dispositif de projection 200.

La situation représentée par la figure 5 peut également correspondre à une projection en mode négatif d'un pictogramme 370 par le deuxième dispositif 300 dans la zone de projection 271 de moindre éclairage.

Ce mode de réalisation permet ainsi à la présente invention de projeter une image en négatif d'un pictogramme 370 dans une zone de la route non éclairée de sorte à renforcer son contraste, et à rendre le pictogramme 370 beaucoup plus visible par le conducteur.

Tout comme pour le cas de la figure 4, cette situation peut par exemple être particulièrement intéressante dans le cas où le pictogramme 370 projeté en négatif est un pictogramme correspondant à une information de haute importance relativement à l'éclairage de la route 400, ou encore au cas où les conditions météorologiques font que ce mode de réalisation est le plus apte à permettre au conducteur de visualiser correctement le pictogramme 370 projeté, et cela selon le mode de projection en négatif.

Dans certaines situations d'éclairage de la route 400, que cela soit dû aux conditions météorologiques ou encore à l'éclairage publique de la route 400, la projection selon le mode négatif du pictogramme 370 peut apporter au conducteur une meilleure visibilité du pictogramme 370 et/ou de la zone intérieure du pictogramme 370.

Avantageusement, la présente invention est configurée de manière à permettre le passage dynamique d'un mode de réalisation à un autre de la présente invention. Par exemple, la présente invention permet le passage dynamique entre l'un quelconque des modes de réalisation illustrés par les figures 2, 3, 4 et 5.

Nous venons de voir par l'intermédiaire des figures 2 à 5, quatre situations différentes de projection d'un pictogramme 370. C'est un des avantages de la présente invention que de pouvoir adapter la projection d'un pictogramme 370 en fonction de divers paramètres de fonctionnement.

Nous allons à présent présenter un descriptif non limitatif du pilotage du premier et du deuxième dispositif de projection.

Selon un mode de réalisation, le premier dispositif de projection 200 est piloté par une électronique de pilotage. Avantageusement, le pilotage électronique du premier dispositif de projection 200 consiste en une mise en forme de la première enveloppe de projection 260.

Par exemple, ce pilotage permet de réduire l'éclairage d'une partie de la zone de projection 261, voire de ne pas éclairer une partie de cette zone de projection 261.

Ce pilotage peut être réalisé directement au niveau de la matrice 210 d'éléments lumineux 211 en réduisant l'émission lumineuse d'une partie des éléments lumineux 211, voire en stoppant l'émission lumineuse d'une partie des éléments lumineux 211.

Ce pilotage peut également être réalisé en introduisant un filtre, voire même un cache opaque, entre une partie des éléments lumineux 211 et la zone de projection 261, avant ou après le dioptre de sortie 230.

Avantageusement, le premier dispositif de projection 200 est piloté par une électronique de pilotage de sorte à piloter la source de lumière pixélisée selon au moins un paramètre de fonctionnement. Ce paramètre de fonctionnement sera décrit dans la suite de cette description.

L'électronique de pilotage permet de piloter le premier dispositif de projection 200 de sorte à créer des zones d'éclairage, et/ou des zones de moindre éclairage, et/ou des zones non éclairées.

La source de lumière pixélisée 220 du premier dispositif de projection 200 est pilotée par l'électronique de pilotage de sorte à piloter chaque pixel composant ladite source de lumière pixélisée et cela individuellement ou non.

Selon un autre mode de réalisation, le deuxième dispositif de projection 300 est piloté par une électronique de pilotage. Avantageusement, le pilotage électronique du deuxième dispositif de projection 300 consiste en une mise en forme de l'enveloppe de projection 360.

Par exemple, ce pilotage permet de réduire l'éclairage d'une partie de la zone de projection 360, voire de ne pas éclairer une partie de cette zone de projection 360.

Ce pilotage peut être réalisé directement au niveau de la matrice de micro-miroirs 350 en positionnant une partie des micro-miroirs selon une position active ou passive.

Ce pilotage peut également être réalisé en introduisant un filtre, voire même un cache opaque, entre une partie des micro-miroirs et la zone de projection 360, avant ou après le dioptre de sortie 330.

Avantageusement, les propriétés de réflexion des micro-miroirs de la matrice de micro-miroirs 350 peuvent être pilotées par l'électronique de pilotage.

Selon un autre mode de réalisation, ce pilotage électronique peut également être réalisé en amont de la matrice de micro-miroirs 350, au niveau de la source lumineuse du deuxième dispositif de projection 300 par exemple ou encore au niveau du réflecteur 340. Ce pilotage peut par exemple correspondre à une réduction de l'intensité lumineuse de la source lumineuse 310 du deuxième dispositif de projection 300.

Avantageusement, le deuxième dispositif de projection 300 est piloté par une électronique de pilotage de sorte à piloter, selon au moins un paramètre de fonctionnement, le pictogramme 370 projeté, ainsi que son mode de projection : positif ou négatif.

De manière préférentielle, le premier dispositif de projection 200 et le deuxième dispositif de projection 300 sont pilotés par une même électronique de pilotage. Cela permet ainsi une plus grande compacité du système de pilotage et également une meilleure coopération entre le premier dispositif de projection 200 et le deuxième dispositif de projection 300 dans leur pilotage.

Nous allons à présent décrire le ou les paramètres de fonctionnement influant sur le pilotage du premier dispositif de projection 200 et/ou sur le pilotage du deuxième dispositif de projection 300.

Avantageusement, le paramètre de fonctionnement correspond à une pluralité de paramètres de fonctionnement, comme par exemple des paramètres environnementaux, préprogrammés ou encore des paramètres utilisateurs.

Selon un mode de réalisation, certains paramètres de fonctionnement peuvent être issus de mesures réalisées par des capteurs, comme par exemple des capteurs météorologiques, des capteurs de position, des capteurs de vitesses, des capteurs de luminosité, caméra, radar, lidar, GPS (Global Positioning System), flux de données, flux RSS, Wi-Fi, Smartphone, Cloud data, etc...

Les paramètres de fonctionnement peuvent être de différents types, comme par exemple des paramètres environnementaux qui peuvent concerner la visibilité de la route, les conditions météorologiques, ...etc... et les paramètres préprogrammés comme ceux issus d'une base de données de pictogrammes, du système de navigation du véhicule, du système de motorisation, du système de communication, etc...

Selon un mode de réalisation, les paramètres de fonctionnement peuvent être interdépendants, par exemple une information de route mouillée peut entrainer le choix d'un pictogramme précis dans une base de données de pictogrammes de sorte à modifier la matrice de micro-miroirs par exemple et de projeter le pictogramme correspondant à la situation identifiée tout en adaptant au besoin l'enveloppe de projection du premier dispositif de projection.

Avantageusement, les paramètres environnementaux peuvent être mesurés par des capteurs compris par le véhicule ou non, ou directement être issus de données informatiques depuis un réseau de communication par exemple, comme l'Internet.

Préférentiellement, les paramètres préprogrammés sont issus du système de gestion du véhicule comme par exemple l'indicateur de vitesse, la position du véhicule relativement à une destination, ...etc...

Selon un mode de réalisation, le paramètre de fonctionnement peut être un paramètre de géo-positionnement, comme la détection d'un changement de direction de la route, ou de l'itinéraire à suivre. Par exemple, dans le cas où le conducteur utilise un navigateur de type GPS, la présente invention peut être configurée pour que le pictogramme 370 projeté par le deuxième dispositif de projection 300 soit une indication de la route à suivre, une flèche par exemple, une distance, ou tout autre élément permettant au conducteur d'être guidé sans quitter la route des yeux.

Selon un autre mode de réalisation, le paramètre de fonctionnement peut être une donnée de localisation, comme une distance entre le véhicule et une destination, ou encore la distance séparant le véhicule du véhicule le précédent.

Selon encore une autre mode de réalisation, le paramètre de fonctionnement peut être au moins un paramètre météorologique. La présente invention peut par exemple détecter des conditions climatiques particulières, les indiquer au conducteur via des pictogrammes projetés à l'avant du véhicule mais également adapter la projection desdits pictogrammes projetés et cela automatiquement en fonction desdites conditions mesurées et/ou déterminées.

L'électronique de pilotage permet avantageusement un pilotage de l'ensemble des degrés de liberté de la présente invention.

De manière particulièrement avantageuse, la présente invention comprend de nombreux degrés de liberté dans la projection de pictogrammes sur la route de sorte à pouvoir s'adapter de préférence automatiquement à de nombreuses conditions de visibilité très variables. Le contraste mais aussi la précision du pictogramme projeté disposent d'une gamme dynamique très importante afin de satisfaire à la plus grande gamme de conditions de visibilité.

La présente invention s'adapte aussi bien aux conditions de visibilité qu'au type de pictogrammes projetés de sorte à adapter la visibilité du pictogramme à la fois en fonction des conditions de visibilité du conducteur mais également de l'importance et de la teneur de l'information indiquée par ledit pictogramme.

La présente invention concerne ainsi également un procédé d'éclairage pour véhicule. Ce procédé comprend de manière préférentielle au moins les étapes suivantes :
o Mesure par au moins un capteur d'au moins un paramètre de fonctionnement ;
o Réception par au moins une électronique de pilotage de ladite mesure ;
o Envoi par ladite au moins une électronique de pilotage d'au moins un premier signal d'activation et/ou de désactivation d'une partie au moins d'une matrice 210 d'éléments lumineux 211 comprise par au moins un premier dispositif de projection 200 ;
o Envoi par ladite au moins une électronique de pilotage, à destination d'au moins un deuxième dispositif de projection 300, d'au moins un deuxième signal de projection d'au moins un pictogramme 370 sélectionné parmi une pluralité de pictogrammes dans au moins une base de données en fonction de ladite au moins une mesure.

La présente invention permet ainsi une adaptation complète de son système d'éclairage en fonction de multiples conditions et paramètres de sorte à apporter au conducteur la meilleure visibilité du pictogramme en fonction de sa pertinence relativement aux conditions de route.

Selon un mode de réalisation, la présente invention bénéficie d'un rapport de pixellisation particulier entre le premier dispositif de projection 200 et le deuxième dispositif de projection 300. En effet, avantageusement, le premier dispositif de projection comprend au moins 1 éléments lumineux 211, de préférence au moins 8 et avantageusement au moins 50.

De préférence, la matrice de micro-miroirs 350 comprend au moins 42000 micro-miroirs, de préférence au moins 1200000 micro-miroirs et avantageusement au moins 4096000 micro-miroirs.

Selon un mode de réalisation, la source de lumière pixélisée peut aussi comprendre ou être constituée de modules séparés constitués chacun d'une source de lumière, ayant chacun leur dioptre de sortie et étant chacun pilotable indépendamment.

Selon un mode de réalisation le nombre d'éléments lumineux 211 du premier dispositif de projection 200 est inférieur au nombre de micro-miroirs du deuxième dispositif de projection 300.

Cela permet ainsi de disposer d'un système d'éclairage ayant les avantages d'une source de lumière faiblement pixélisé et d'un faisceau hautement pixélisé. La présente invention dispose ainsi de la puissance et de la précision nécessaire afin d'assurer la bonne visibilité des pictogrammes projetés et cela de manière dynamique relativement aux conditions de visibilité pour l'utilisateur, et à la nature des pictogrammes. Le système décrit peut être intégré en tout ou partie dans un bloc de phare, notamment en face avant du véhicule. Le système peut comprendre des éléments répartis en au moins deux groupes d'éléments, les groupes d'éléments étant chacun disposé d'un côté différent de l'axe optique. Par exemple, un premier groupe comprend un premier dispositif de projection et un deuxième dispositif de projection dans un bloc de phare d'un côté du véhicule ; un deuxième groupe comprend un premier dispositif dans un bloc de phare de l'autre côté du véhicule ; les faisceaux issus des premiers dispositifs sont de préférence convergents vers l'axe optique. Le deuxième groupe peut aussi inclure un deuxième dispositif pour l'affichage de pictogramme en complément ou en alternative à la projection du deuxième dispositif du premier groupe d'éléments. Un ou plusieurs groupes d'éléments peut comprendre des moyens de projection additionnels, par exemple pour la réalisation d'autres fonctions d'éclairage, tel un faisceau de route.

Selon un mode de réalisation séparable, le profil de contraste du pictogramme projeté est renforcé par rapport à l'ambiance lumineuse moyenne du faisceau d'arrièreplan, sur lequel ou dans lequel le motif est inclus.

A cette fin, les bordures du pictogramme, depuis l'extérieur de celui-ci vers l'intérieur et dans au moins une dimension (largeur ou hauteur) du plan de projection du pictogramme, présentent une alternance d'au moins deux zones d'intensité différentes par rapport à l'intensité moyenne du faisceau d'arrière-plan, une première zone étant d'intensité plus forte ou plus faible par rapport à cette intensité moyenne et la seconde zone étant respectivement d'intensité plus faible ou plus forte par rapport à cette intensité moyenne. Dans une variante d'exécution, la seconde zone constitue le cœur ou zone centrale du pictogramme et est alors bordée au moins dans une dimension par la première zone.

Ainsi, la perception par le conducteur ou les tiers du message constitué par le pictogramme projeté est renforcée, le temps de réaction par rapport au message projeté est diminué et la sécurité de conduite est de fait améliorée.

Le gradient d'intensité et le niveau d'intensité appliqués peuvent être constants ou varier le long du motif selon une direction de la dimension de projection considérée (largeur ou hauteur, par exemple respectivement de la gauche vers la droite ou depuis le bas vers le haut, correspondant à une projection champ proche du véhicule vers l'horizon). En outre cette variation peut être statique ou dynamique, c'est-à-dire pilotée en fonction de l'environnement du véhicule : par exemple, en fonction de l'imminence d'un événement, on pourra diminuer ou renforcer dynamiquement le contraste, de sorte à générer un effet d'ondulation du motif qui apparaitra plus ou moins net dans le faisceau d'arrière-plan et à attirer l'attention du conducteur ou des tiers sur l'imminence de l'événement correspondant au pictogramme projeté (flèche de sortie ou de virage, alerte collision, piéton qui traverse, etc...). Ce mode de réalisation particulier améliore ainsi encore davantage la sécurité de conduite.

De manière particulièrement avantageuse, cette variation de gradient est possible par le pilotage du dispositif de projection du faisceau de lumière pixélisé.

Par exemple, dans le cas de l'utilisation d'un DMD, cette variation de gradient est possible par pilotage des micro-miroirs. Ceux-ci peuvent être placés dans des positions intermédiaires entre la position active et la position passive. Ces positions intermédiaires peuvent par exemple être codées sur 8 bits soit permettre 255 niveaux de gris. Il est ainsi possible de jouer sur le niveau de gris, donc le gradient en jouant sur le temps passés par les micro-miroirs dans ces états intermédiaires

L'invention n'est pas limitée aux modes de réalisation décrits mais s'étend à tout mode de réalisation inclu dans les revendications telles que présentées en annexe.

### REFERENCES

- 100.: Véhicule ;

- 200.: Premier dispositif de projection ;
- 210.: Matrice d'éléments lumineux ;
- 211.: Elément lumineux ;
- 220.: Lumière pixélisée ;
- 230.: Dioptre de sortie du premier dispositif de projection ;
- 260.: Première enveloppe de projection ;
- 261.: Zone éclairée de la première enveloppe de projection ;
- 270.: Sous-enveloppe de projection ;
- 271.: Zone non éclairée de la première enveloppe de projection, définie par la sous-enveloppe de projection 270 ;

- 300.: Deuxième dispositif de projection ;
- 310.: Source lumineuse du deuxième dispositif de projection ;
- 320.: Faisceau pixélisé ;
- 330.: Dioptre de sortie du deuxième dispositif de projection ;
- 340.: Réflecteur ;
- 350.: Matrice de micro-miroirs ;
- 360.: Deuxième enveloppe de projection ;
- 361.: Zone extérieure du Pictogramme ;
- 370.: Pictogramme ;
- 371.: Zone intérieure du Pictogramme ;

- 400.: Route.

## Revendications

1. Système d'éclairage pour véhicule (100), comprenant au moins un premier dispositif de projection (200) d'au moins une source de lumière pixélisée (220) définissant au moins une première enveloppe de projection (260) et au moins un deuxième dispositif de projection (300) d'au moins un faisceau de lumière pixélisé (320) définissant au moins une deuxième enveloppe de projection (360) et configuré pour projeter au moins un pictogramme (370), tel que ladite au moins une première enveloppe de projection (260) et ladite au moins une deuxième enveloppe de projection (360) présentent au moins une zone de recouvrement.

2. Système selon la revendication précédente dans lequel ledit au moins un deuxième dispositif de projection (300) est configuré pour projeter ledit au moins un pictogramme (370) selon au moins un mode de projection positif correspondant à une projection lumineuse de une zone intérieure (371) dudit au moins un pictogramme (370).

3. Système selon la revendication précédente dans lequel ledit au moins un premier dispositif de projection (200) est configuré pour coopérer avec ledit au moins un deuxième dispositif de projection (300) de manière à produire un éclairage d'une partie au moins de ladite au moins une zone de recouvrement lorsque ledit au moins un pictogramme (370) est projeté par ledit au moins un deuxième dispositif de projection (300) selon ledit au moins un mode de projection positif.

4. Système selon l'une quelconque des deux revendications précédentes dans lequel ledit au moins un premier dispositif de projection (200) est configuré pour coopérer avec ledit au moins un deuxième dispositif de projection (300) de manière à produire un moindre éclairage d'une partie au moins de ladite au moins une zone de recouvrement par rapport à l'éclairage de la zone intérieure (371) dudit au moins un pictogramme (370), lorsque ledit au moins un pictogramme (370) est projeté par ledit au moins un deuxième dispositif de projection (300) selon ledit au moins un mode de projection positif, et en produisant un éclairage dans au moins une partie de ladite au moins une première enveloppe de projection (260) en dehors de la zone intérieure (371) dudit au moins un pictogramme (370).

5. Système selon l'une quelconque des revendications précédentes dans lequel ledit au moins un deuxième dispositif de projection (300) est configuré pour projeter ledit au moins un pictogramme (370) selon au moins un mode de projection négatif correspondant à une projection lumineuse d'une zone extérieur (361) dudit au moins un pictogramme (370).

6. Système selon la revendication précédente dans lequel ledit au moins un premier dispositif de projection (200) est configuré pour coopérer avec ledit au moins un deuxième dispositif de projection (300) de manière à produire un éclairage d'une partie au moins de ladite au moins une zone de recouvrement lorsque ledit au moins un pictogramme (370) est projeté par ledit au moins un deuxième dispositif de projection (300) selon ledit au moins un mode de projection négatif.

7. Système selon l'une quelconque des deux revendications précédentes dans lequel ledit au moins un premier dispositif de projection (200) est configuré pour coopérer avec ledit au moins un deuxième dispositif de projection (300) de manière à produire un moindre éclairage d'une partie au moins de ladite au moins une zone de recouvrement par rapport à l'éclairage de la zone extérieure (361) dudit au moins un pictogramme (370), lorsque ledit au moins un pictogramme (370) est projeté par ledit au moins un deuxième dispositif de projection (300) selon ledit au moins un mode de projection négatif, et en produisant un éclairage dans au moins une partie de ladite au moins une première enveloppe de projection (260) en dehors de la zone extérieure (361) dudit au moins un pictogramme (370).

8. Système selon l'une quelconque des revendications précédentes dans lequel ledit au moins un premier dispositif de projection (200) comprend au moins une matrice (210) d'éléments lumineux (211) configurée pour former ladite au moins une source de lumière pixélisée (220).

9. Système selon la revendication précédente dans lequel ladite au moins une matrice (210) d'éléments lumineux (211) est une matrice dont le nombre de colonnes est supérieur ou égal au nombre de lignes.

10. Système selon l'une quelconque des revendications précédentes dans lequel ledit au moins un deuxième dispositif de projection (300) comprend au moins une première matrice de micro-miroirs (350) configurée pour former ledit au moins un faisceau de lumière pixélisé (320) à partir d'au moins une source lumineuse (310).

11. Système selon la revendication précédente dans lequel ledit au moins un deuxième dispositif de projection (300) comprend au moins une deuxième matrices de micro-miroirs.

12. Système selon la revendication précédente dans lequel ladite au moins une première matrice de micro-miroirs (350) et ladite au moins une deuxième matrice de micro-miroirs sont configurées pour former respectivement au moins un premier sous-faisceau de lumière pixélisé et au moins un deuxième sous-faisceau de lumière pixélisé, ledit au moins un premier sous-faisceau de lumière pixélisé et ledit au moins un deuxième sous-faisceau de lumière pixélisé étant configurés pour former ledit au moins un faisceau de lumière pixélisé (320).

13. Système selon l'une quelconque des revendications précédentes dans lequel ladite au moins une zone de recouvrement correspond à un taux de recouvrement entre ladite au moins une première enveloppe de projection (260) et ladite au moins une deuxième enveloppe de projection (360) compris entre 0% et 100%, avantageusement entre 30% et 70% et de préférence égal à 50%.

14. Système selon l'une quelconque des revendications 8 à 13 dans lequel le nombre de pixels (211) de ladite au moins une source de lumière pixélisée (220) est inférieur au nombre de pixels dudit au moins un faisceau de lumière pixélisé (320).

15. Système selon l'une quelconque des revendications 8 à 13 dans lequel le rapport entre le nombre de pixels (211) de ladite au moins une source de lumière pixélisée (220) et le nombre de pixels dudit au moins un faisceau de lumière pixélisé (320) est inférieur à 200, de préférence à 50, et avantageusement à 3.

16. Système selon l'une quelconque des revendications précédentes dans lequel ledit au moins un premier dispositif de projection (200) et ledit au moins un deuxième dispositif de projection (300) présentent un dioptre de sortie commun.

## Patentansprüche

1. Beleuchtungssystem (100) für ein Kraftfahrzeug, das mindestens eine erste Projektionsvorrichtung (200) mindestens einer Pixellichtquelle (220) umfasst, die mindestens eine erste Projektionshülle (260) definiert, und mindestens eine zweite Projektionsvorrichtung (300) mindestens eines Pixellichtstrahls (320), die mindestens eine zweite Projektionshülle (360) definiert und dazu konfiguriert ist, mindestens ein Piktogramm (370) derart zu projizieren, dass die mindestens eine erste Projektionshülle (260) und die mindestens eine zweite Projektionshülle (360) mindestens eine Überlagerungszone aufweisen.

2. System nach dem vorstehenden Anspruch, wobei die mindestens eine zweite Projektionsvorrichtung (300) dazu konfiguriert ist, das mindestens eine Piktogramm (370) gemäß mindestens einem positiven Projektionsmodus, der einer Lichtprojektion von einer Innenzone (371) des mindestens einen Piktogramms (370) entspricht, zu projizieren.

3. System nach dem vorstehenden Anspruch, wobei die mindestens eine erste Projektionsvorrichtung (200) dazu konfiguriert ist, mit der mindestens einen zweiten Projektionsvorrichtung (300) derart zusammenzuwirken, dass eine Beleuchtung eines Teils mindestens der mindestens einen Überlagerungszone erzeugt wird, wenn das mindestens eine Piktogramm (370) von der mindestens einen zweiten Projektionsvorrichtung (300) gemäß mindestens einem positiven Projektionsmodus projiziert wird.

4. System nach einem der zwei vorstehenden Ansprüche, wobei die mindestens eine erste Projektionsvorrichtung (200) dazu konfiguriert ist, mit der mindestens einen zweiten Projektionsvorrichtung (300) zusammenzuwirken, um eine geringere Beleuchtung eines Teils mindestens der mindestens einen Überlagerungszone in Bezug auf die Beleuchtung der Innenzone (371) des mindestens einen Piktogramms (370) zu erzeugen, wenn das mindestens eine Piktogramm (370) von der mindestens einen zweiten Projektionsvorrichtung (300) gemäß dem mindestens einen positiven Projektionsmodus projiziert wird, und indem eine Beleuchtung in mindestens einem Teil der mindestens einen ersten Projektionshülle (260) außerhalb der Innenzone (371) des mindestens einen Piktogramms (370) erzeugt wird.

5. System nach einem der vorstehenden Ansprüche, wobei die mindestens eine zweite Projektionsvorrichtung (300) dazu konfiguriert ist, das mindestens eine Piktogramm (370) gemäß mindestens einem negativen Projektionsmodus, der einer Lichtprojektion einer Außenzone (361) des mindestens einen Piktogramms (370) entspricht, zu projizieren.

6. System nach dem vorstehenden Anspruch, wobei die mindestens eine erste Projektionsvorrichtung (200) dazu konfiguriert ist, mit der mindestens einen zweiten Projektionsvorrichtung (300) derart zusammenzuwirken, dass eine Beleuchtung eines Teils mindestens der mindestens einen Überlagerungszone erzeugt wird, wenn das mindestens eine Piktogramm (370) von der mindestens einen zweiten Projektionsvorrichtung (300) gemäß mindestens einem positiven Projektionsmodus projiziert wird.

7. System nach einem der zwei vorstehenden Ansprüche, wobei die mindestens eine erste Projektionsvorrichtung (200) dazu konfiguriert ist, mit der mindestens einen zweiten Projektionsvorrichtung (300) zusammenzuwirken, um eine geringere Beleuchtung eines Teils mindestens der mindestens einen Überlagerungszone in Bezug auf die Beleuchtung der Außenzone (361) des mindestens einen Piktogramms (370) zu erzeugen, wenn das mindestens eine Piktogramm (370) von der mindestens einen zweiten Projektionsvorrichtung (300) gemäß dem mindestens einen negativen Projektionsmodus projiziert wird, und indem eine Beleuchtung in mindestens einem Teil der mindestens einen ersten Projektionshülle (260) außerhalb der Außenzone (361) des mindestens einen Piktogramms (370) erzeugt wird.

8. System nach einem der vorstehenden Ansprüche, wobei die mindestens eine erste Projektionsvorrichtung (200) mindestens eine Matrix (210) von Leuchtelementen (211) umfasst, die dazu konfiguriert ist, die mindestens eine Pixellichtquelle (220) zu bilden.

9. System nach dem vorstehenden Anspruch, wobei die mindestens eine Matrix (210) von Leuchtelementen (211) eine Matrix ist, deren Spaltenanzahl größer oder gleich der Zeilenanzahl ist.

10. System nach einem der vorstehenden Ansprüche, wobei die mindestens eine zweite Projektionsvorrichtung (300) mindestens eine erste Mikrospiegelmatrix (350) umfasst, die dazu konfiguriert ist, den mindestens einen Pixellichtstrahl (320) ausgehend von mindestens einer Lichtquelle (310) zu bilden.

11. System nach dem vorstehenden Anspruch, wobei die mindestens eine zweite Projektionsvorrichtung (300) mindestens eine zweite Mikrospiegelmatrix umfasst.

12. System nach dem vorstehenden Anspruch, wobei die mindestens eine erste Mikrospiegelmatrix (350) und die mindestens eine zweite Mikrospiegelmatrix dazu konfiguriert sind, jeweils mindestens einen ersten Pixellicht-Substrahl und mindestens einen zweiten Pixellicht-Substrahl zu bilden, wobei der mindestens eine erste Pixellicht-Substrahl und der mindestens eine zweite Pixellicht-Substrahl dazu konfiguriert sind, den mindestens einen Pixellichtstrahl (320) zu bilden.

13. System nach einem der vorstehenden Ansprüche, wobei die mindestens eine Überlagerungszone einem Überlagerungsprozentsatz zwischen der mindestens einen ersten Projektionshülle (260) und der mindestens einen zweiten Projektionshülle (360) zwischen 0 % und 100 %, vorteilhafterweise zwischen 30 % und 70 % und bevorzugt gleich 50 % entspricht.

14. System nach einem der Ansprüche 8 bis 13, wobei die Anzahl von Pixeln (211) der mindestens einen Pixellichtquelle (220) kleiner ist als die Anzahl von Pixeln des mindestens einen Pixellichtstrahls (320).

15. System nach einem der Ansprüche 8 bis 13, wobei das Verhältnis zwischen der Anzahl von Pixeln (211) der mindestens einen Pixellichtquelle (220) und der Anzahl von Pixeln des mindestens einen Pixellichtstrahls (320) kleiner als 200, bevorzugt als 50 und vorteilhafterweise als 3 ist.

16. System nach einem der vorstehenden Ansprüche, wobei die mindestens eine erste Projektionsvorrichtung (200) und die mindestens eine zweite Projektionsvorrichtung (300) einen gemeinsamen Ausgangsdiopter aufweisen.

## Claims

1. Lighting system for a vehicle (100), said system comprising at least one first device (200) for projecting at least one pixelated light source (220) defining at least one first projection envelope (260) and at least one second projecting device (300) for projecting at least one pixelated light beam (320) defining at least one second projection envelope (360) and configured to project at least one pictogram (370), such that said at least one first projection envelope (260) and said at least one second projection envelope (360) have at least one region of overlap.

2. System according to the preceding claim, wherein said at least one second projecting device (300) is configured to project said at least one pictogram (370) in at least one positive projection mode corresponding to a luminous projection of an interior region (371) of said at least one pictogram (370).

3. System according to the preceding claim, wherein said at least one first projecting device (200) is configured to interact with said at least one second projecting device (300) so as to produce an illumination of one portion at least of said at least one region of overlap when said at least one pictogram (370) is projected by said at least one second projecting device (300) in said at least one positive projection mode.

4. System according to either one of the two preceding claims, wherein said at least one first projecting device (200) is configured to interact with said at least one second projecting device (300) so as to produce a lesser illumination of one portion at least of said at least one region of overlap with respect to the illumination of the interior region (371) of said at least one pictogram (370), when said at least one pictogram (370) is projected by said at least one second projecting device (300) in said at least one positive projection mode, and while producing an illumination in at least one portion of said at least one first projecting envelope (260) outside of the interior region (371) of said at least one pictogram (370).

5. System according to any one of the preceding claims, wherein said at least one second projecting device (300) is configured to project said at least one pictogram (370) in at least one negative projection mode corresponding to a luminous projection of an exterior region (361) of said at least one pictogram (370).

6. System according to the preceding claim, wherein said at least one first projecting device (200) is configured to interact with said at least one second projecting device (300) so as to produce an illumination of one portion at least of said at least one region of overlap when said at least one pictogram (370) is projected by said at least one second projecting device (300) in said at least one negative projection mode.

7. System according to either one of the two preceding claims, wherein said at least one first projecting device (200) is configured to interact with said at least one second projecting device (300) so as to produce a lesser illumination of one portion at least of said at least one region of overlap with respect to the illumination of the exterior region (361) of said at least one pictogram (370), when said at least one pictogram (370) is projected by said at least one second projecting device (300) in said at least one negative projection mode, and while producing an illumination in at least one portion of said at least one first projection envelope (260) outside of the exterior region (361) of said at least one pictogram (370).

8. System according to any one of the preceding claims, wherein said at least one first projecting device (200) comprises at least one matrix array (210) of luminous elements (211) that is configured to form said at least one pixelated light source (220).

9. System according to the preceding claim, wherein said at least one matrix array (210) of luminous elements (211) is a matrix array the number of columns of which is higher than or equal to the number of rows.

10. System according to any one of the preceding claims, wherein said at least one second projecting device (300) comprises at least one first digital micromirror device (350) configured to form said at least one pixelated light beam (320) from at least one light source (310).

11. System according to the preceding claim, wherein said at least one second projecting device (300) comprises at least one second digital micromirror device.

12. System according to the preceding claim, wherein said at least one first digital micromirror device (350) and said at least one second digital micromirror device are configured to form at least one first pixelated light sub-beam and at least one second pixelated light sub-beam, respectively, said at least one first pixelated light sub-beam and said at least one second pixelated light sub-beam being configured to form said at least one pixelated light beam (320).

13. System according to any one of the preceding claims, wherein said at least one region of overlap corresponds to a degree of overlap between said at least one first projection envelope (260) and said at least one second projection envelope (360) comprised between 0% and 100%, advantageously between 30% and 70% and preferably equal to 50%.

14. System according to any one of Claims 8 to 13, wherein the number of pixels (211) of said at least one pixelated light source (220) is lower than the number of pixels of said at least one pixelated light beam (320).

15. System according to any one of Claims 8 to 13, wherein the ratio between the number of pixels (211) of said at least one pixelated light source (220) and the number of pixels of said at least one pixelated light beam (320) is lower than 200, preferably than 50, and advantageously than 3.

16. System according to any one of the preceding claims, wherein said at least one first projecting device (200) and said at least one second projecting device (300) have a common exit dioptric interface.
